# EUROPEAN PATENT APPLICATION

(11) **EP 2 626 362 A1**
(43) Date of publication of application: **14.08.2013**
(21) Application number: 12154788.9
(22) Date of filing: 09.02.2012
(51) Int. Cl.: C07F 9/53

(54) **Synthesis of water-soluble phosphine oxides by Pd/C-catalyzed P-C coupling in water**

(71) Applicant: Paul Scherrer Institut, 5232 Villigen (CH)
(72) Inventor: Ranocchiari, Marco, 4310 Rheinfelden (CH); Rummelt, Stephan, 8004 Zürich (CH); Van Bokhoven, Jeroen A., 8004 Zürich (CH)
(74) Representative: Fischer, Michael

(57) **Abstract**

Cross-coupling between diphenylphosphine oxide and halogenated benzoic acids catalyzed by Pd/C in water is a green, simple and fast protocol to obtain water-soluble tertiary phosphine oxides without the addition of ligands and additives. Low reaction times, microwave irradiation, and high substrate scope make this method general and excellent for lab- and large-scale synthesis without the need to use organic solvents for neither reaction nor workup.

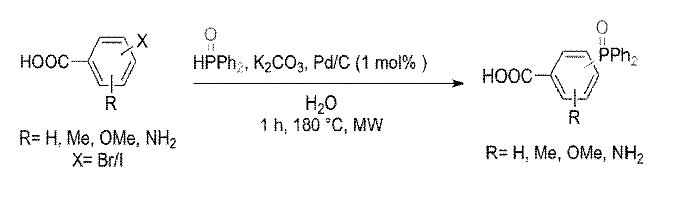

## Description

The present invention relates to a process for the synthesis of water-soluble phosphine oxides by Pd/C-catalyzed P-C coupling in water.

Phosphine oxides are very important intermediates for chemical synthesis because they are the main precursors of the corresponding free phosphines, which are essential for transition metal catalysis and for organocatalysis. They can also be excellend ligands themselves and, more recently, have found application in organocatalysis due to their Lewis basic properties. Water soluble phosphines and phosphine oxides have special advantages in industrial processes based on homogeneous catalysts since they allow easier separation of the metal catalyst from the reaction mixture by using two-phases water/organic solvent systems. The SHELL Higher Olefinic Process (SHOP) is a practical industrial example of a successful application of water-soluble phosphines in two-phases homogeneous catalysis.

The introduction of polar groups, such as sulphates, ammonium salts, and carboxylates, to synthesize water-soluble organophosphorous compounds is however strongly limited by the few methods available in the literature, which usually require either harsh conditions or the use of very air-sensitive reagents in stoichiometric amount. Catalytic processes that build phosphourous-carbon bonds (P-C couplings) based on Pd, Cu, and Ni overcome some of these limitations and allow the synthesis of phosphines under mild conditions and with great functional group tolerance. Still, P-C coupling reactions are mostly homogeneous systems that need (a) the presence of ligands that are able to activate bromoaryl derivatives, (b) the use of high boiling organic solvents, (c) generally secondary phosphines as coupling partners, which are oxygen-sensitive reactants -, and (d) quite long reaction times up to 48 h to give good conversion. For the reasons above, P-C couplings are still limited even though they present major advantages over traditional stoichiometric methods.

It is therefore the objective of the present invention to provide a catalytic method of industrial applicability that produces water-soluble phosphine derivatives which should ideally be (a) insensitive to air, (b) recyclable, (c) sustainable from an environmental point of view, and (d) versatile and potentially scalable. This objective is achieved according to the present invention by a method for the synthesis of water-soluble phosphine oxides, comprising the steps of:
a) using as a starting phosphine derivatives of general formula R2PHX with R=alkyl, aryl, or H, or a mixture thereof, and X = O or BH3 or nothing;
b) performing a Pd/C-catalyzed P-C coupling in a polar solvent, preferably water, under the application of elevated temperatures as compared to basic conditions.

The reaction scheme below shows a typical example for the present invention, wherein the abbreviation "MW" represents heating by microwave.

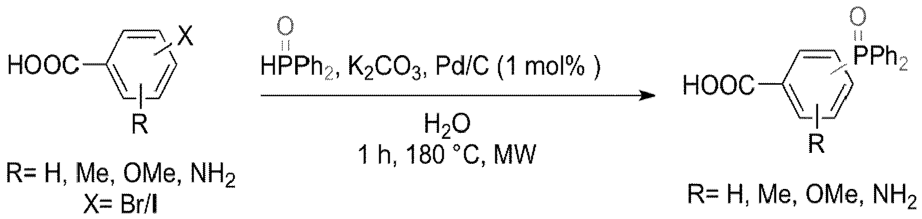

Preferably, the temperature of this reaction may range from 25°C and 200°C. For the heating, a preferred embodiment of the present invention can provide a heating of the solution by microwave or by conventional heating. With respect to the starting reactants, preferred embodiments of the present invention can provide as starting coupling reactants organic molecules with one or more functionalizations of group A and one or more functionalitations of group B, wherein group A functionalizations are carboxylic acid, sulfonic acid, carboxylate, sulfonate, hydroxyl, hydroxylate, amino, ammonium, phopshino, phosphonium, and group B functionalizations are chloro, bromo, iodo, triflate, tosilate.

The present invention therefore illustrates a catalytic P-C coupling with the above-mentioned characteristics. This method produces water-soluble phosphine oxides with carboxylic acid groups by employing diphenlyphosphine oxide as P-source and Pd/C as catalyst. Sustainability and non toxicity are key points for this new environmentally friendly process. Since it is the interest to produce water-soluble phosphorous compounds, H₂O seemed the obvious choice as reaction medium for both reaction and workup. Using water as a solvent for catalytic reactions is far from trivial, though, since it does not dissolve most organic reactants and phase-transfer reagents are often required. In the present case, the solubility problem is overcome by the basic reaction conditions, which solubilize the molecules with carboxylic acid.

It has to be noted that secondary phosphine oxides are known to react with bromo aryls, allyls, and aryltriflates in the presence of a Pd, Ni or Cu source and a base. Recently, a C-P coupling of bromo- and iodoaryl with diphenylphosphine oxide in water using a nickel/zinc homogenous system was published. No heterogeneous catalytic systems that produce phosphine oxides have been known so far.

The initial screening was performed with 4-iodobenzoic acid, which was used as a model reactant for the coupling with diphenylphosphine oxide catalyzed by Pd/C in water using conventional heating. The screening of temperature, different bases, phase-transfer additives, and time was performed (Table 1).

**Table 1. Initial screening of P-C coupling of 4-iodobenzoic acid under conventional heating^{a}**

| 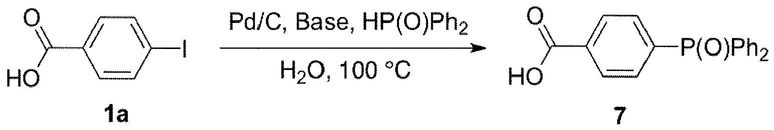 | | | | | |
|---|---|---|---|---|---|
| entry | Pd/C (mol%) | HP(O)Ph₂ (equiv) | base (mol%) | TBAB (equiv) | conversion (%) |
| 1 | 5.0 | 1.0 | Na₂CO₃ (6 equiv) | 1.0 | 62 |
| 2^{b} | 10 | 1.0 | Na₂CO₃ (6 equiv) | 1.0 | 0 |
| 3 | 5.0 | 1.0 | K₂CO₃ (6 equiv) | 1.0 | 79 |
| 4 | 5.0 | 1.0 | Et₃N (6 equiv) | 1.0 | 58 |
| 5 | 5.0 | 1.0 | NaOH (6 equiv) K₂CO₃ | 1.0 | 80 |
| 6 | 5.0 | 1.0 | (6 equiv) K₂CO₃ | 1.0 | 85 |
| 7 | 0.20 | 1.0 | (6 equiv) K₂CO₃ | 1.0 | 44 |
| 8 | 1.0 | 1.3 | (6 equiv) K₂CO₃ | - | 98 |
| 9^{c} | 1.0 | 1.3 | (4 equiv) | - | 99 |

| | | | | | |
|---|---|---|---|---|---|
| ^{a} Standard conditions: iodobenzoic acid (0.55 mmol), HP(O)Ph₂, base, Pd/C, H₂O (10 mL), conventional heating, 100 °C, 1 h. ^{b} 70 °C. ^{c} H₂O (5 mL). | | | | | |

Variation of the temperature showed that below 100 °C no or just a poor conversion was observed (entry 2). The base had a strong influence on the yield, and K₂CO₃ was found to be best among Na₂CO₃, NaOH and Et₃N (entries 1, 3, 4, and 5). Although initial screening was performed in the presence of a phase transfer agent such as tertbutylammonium bromide (TBAB), it was discovered that it did not have any positive effects on the reaction (entries 7-10). Furthermore, a slight excess of HP(O)Ph₂ was needed to obtain full conversion (entries 8-10). Under optimized conditions, 4-iodobenzoic acid (0.55 mmol) was dissolved in degassed water (5 mL) with Pd/C (1 mol%), K₂CO₃ (1.65 mmol), and HP(O)Ph₂ (0.70 mmol), and the mixture stirred at 100 °C for 1 h (entry 9). After filtration over celite of the catalyst, the filtrate was simply acidified with HCl (∼1 M), and the product recovered by filtration. No organic solvent was used.

Different halogenated benzoic acids (4-bromo and 2-iodobenzoic acid) did not yield the desired product under such reaction conditions. This appeared to limited the scope of the reaction. Therefore, microwave (MW) heating was used, instead of conventional heating, inspired by the results of Stadler et al about C-P coupling with diphenylphosphine.

Table 2 summarizes different substrates and their yields. Simple iodo- and bromobenzoic acids such as 3- and 4-iodobenzoic acid **(1a** and **2a),** 3- and 4-bromobenzoic acid **(1b** and **2b)** readily coupled with HP(O)Ph₂ in high yields at 180 °C under MW irradiation, to give phosphines **7** and **8** (entries 1-4). Iodo derivatives yielded less product, due to their easier tendency to dehalogenate under reaction conditions (see below) as observed in other similar protocols. Traces of benzoic acid were observed via ¹H NMR after extraction of the reaction mixture. It is noteworthy that 4-chlorobenzoic acid also coupled with HP(O)Ph₂, although in 18% yield.

Commercially available 3-iodo-4-methylbenzoic acid **(3a)** and 3-bromo-4-methylbenzoic acid **(3b)** gave the corresponding novel phosphine oxide **9** in 81% and 60% yield, respectively (entries 5, 6). Phosphine oxide **10** was produced in moderate yields from 3-iodo-4-methoxybenzoic **(4a)** and 3-bromo-4-methoxybenzoic acid **(4b).** ¹H NMR spectroscopic analysis of the reaction mixture revealed that the moderate yield was due to dehalogenation in the case of **4a,** and to low conversion and dehalogenation in the case of **4b.** The novel bidentate phosphine oxide-amino **(11)** and bis(phosphine oxide) **(12)** compounds were also synthesized in 41% and 69% yield, respectively, with the same protocol from commercially available products **5** (entry 9) and **6** (entry 10). All substrates with a halogen in 2-position gave only traces of product due to steric hindrance. Also halogenated hydroxy-benzoic acids gave only traces of product under the given reaction conditions.

Further, the recyclability of the catalyst was tested. After the first run, the catalyst was filtered with a microfiber glass filter and reused for the phosphination of substrate **3a** at 180 °C under MW irradiation. The second catalyst run produced **9** in 78% yield, comparable to the first run.

The workup was performed as described above for conventional heating C-P cross-coupling by filtration over celite of the catalyst, acidification, and filtration of the product without any use of organic solvent. A phosphorus-containing byproduct, which was identified as diphenylphosphonic acid by ³¹P and ¹H NMR spectroscopy, was observed in all entries. This also explains why a slight excess of diphenylphosphine oxide was needed. Such byproduct was easily removed by acidification of the reaction mixture at controlled pH between 4 and 5. Under such conditions, the product precipitated, whereas diphenylphosphonic acid, eventual starting material, and dehalogenated product remained in solution. Alternatively, starting material and dehalogenation product were removed from the precipitate by sublimation. Bis(phosphine oxide) **12** was isolated pure by recrystallization in ethanol to separate it from a small amount of mono-phosphinated product.

This results in the development of a novel method to couple various iodo- and bromobenzoic acids with diphenylphosphine oxide in water, by using a heterogeneous and recyclable catalyst. Because of the utilization of (a) water as solvent for both reaction and workup, (b) heterogeneous catalyst and (c) microwave irradiation, it is an environmentally friendly and sustainable reaction for carbon-phosphorus coupling. This protocol allows the synthesis of four new phosphine oxides and, indirectly, of the corresponding free phosphines containing carboxylic acid functionalities. All the products were fully characterized and can be of further use as monodentate (7, 8, 9, and 10) or bidentate (11 and 12) ligands for biphasic and water-soluble metal- and organocatalysis. This, in combination with the easy and fast reaction, and simple workup conditions, makes this reaction protocol a good candidate for application both in lab- and large-scale synthesis.

In the following the main process steps are hereinafter summarized:
a) Mixing all the chemicals in a batch reactor (catalyst, R2PHO, halogenated substrate) together in water;
b) heating at high temperature by microwave or conventional heating;
c) at the end of the reaction separation of the catalyst from the solution by filtration;
d) purification of the product by filtration of the acidified filtrate from point c (controlled pH may be required); and
e) recycling of the catalyst separated in step c).

The catalyst currently shows with the Pd/C pair the best results but also other metal/C pairs could be envisioned, such as **Cu/C,** Ni/C, Rh/C, Pt/C, Ag/C, Au/C. The catalyst can be supported by a ceramic support, together with carbon (C), where possible support materials are silica (Si02), alumina (Al2O3), calcium carbonate (CaCO3), strontium carbonate (SrCO3), Barium carbonate (BaCO3), barium sulfate (BaS04), asbest, or mixtures thereof, which are all commercially available supports for metal catalysts and Pd catalysts in particular.

Another preferred embodiment of the present invention can alternatively provide for a fixed-bed reactor where the heterogeneous catalyst is in a stationary phase and the reagents' solution is passed through it at elevated temperature. The workup will be step d) described above. This would be a continuous flow system.

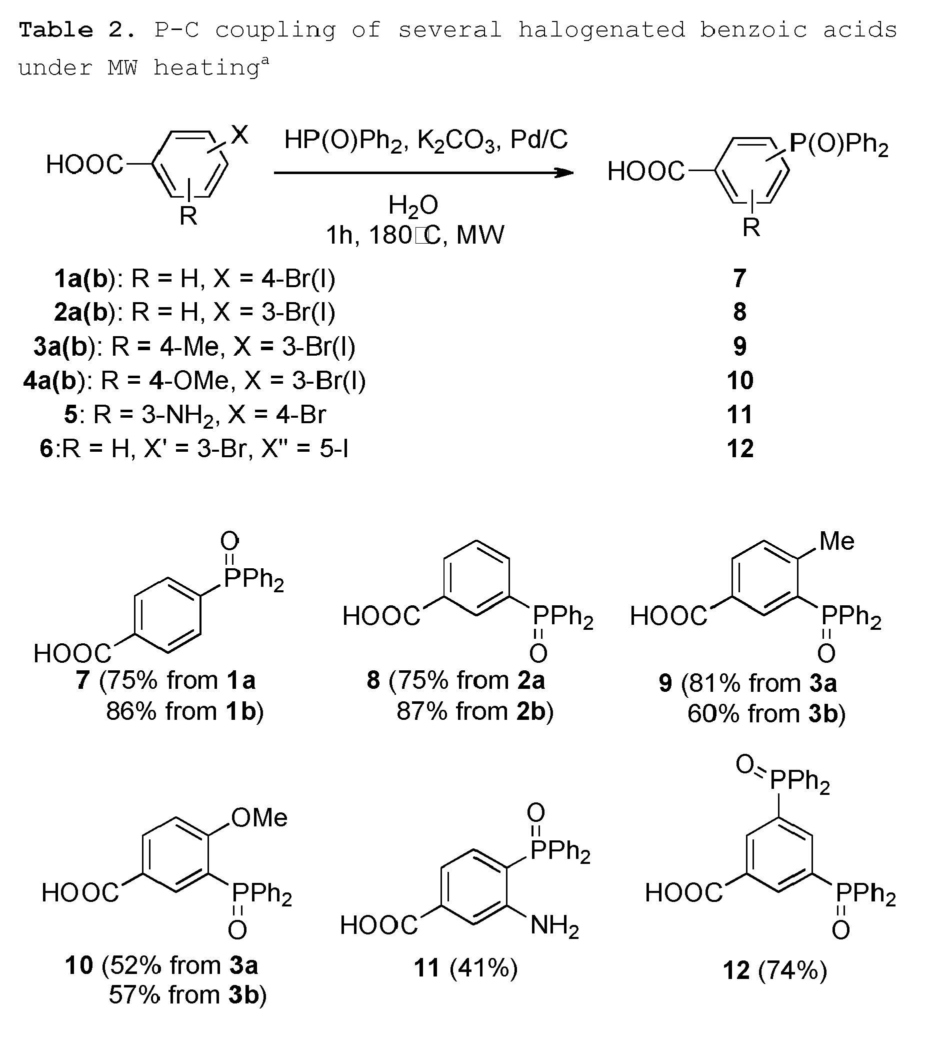

## Claims

1. A method for the synthesis of water-soluble phosphine oxides, comprising the steps of:
a) using as a starting phosphine derivatives of general formula R2PHX with R=alkyl, aryl, or H, or a mixture thereof, and X = O or BH3 or nothing;
b) performing a Pd/C-catalyzed P-C coupling in a polar solvent, preferably water, under the application of elevated temperatures as compared to basic conditions.

2. The method according to claim 1, wherein the temperature of this reaction ranges from 25°C and 200°C.

3. The method according to claim 1 or 2, wherein a heating of the solution is performed by microwave or by conventional heating.

4. The method according to any of the preceding claims, wherein as starting coupling reactants are used organic molecules with one or more functionalizations of group A and one or more functionalitations of group B, wherein group A functionalizations are carboxylic acid, sulfonic acid, carboxylate, sulfonate, hydroxyl, hydroxylate, amino, ammonium, phopshino, phosphonium, and group B functionalizations are chloro, bromo, iodo, triflate, tosilate.
